# EUROPEAN PATENT SPECIFICATION

(11) **EP 4 295 573 B1**
(45) Date of publication and mention of the grant of the patent: **04.06.2025**
(21) Application number: 22705483.0
(22) Date of filing: 16.02.2022
(51) Int. Cl.: H04N 9/75, H04N 5/275, F21V 21/06, H04N 23/56, G03B 15/06

(54) **IMPLEMENTATION SYSTEM OF A VIDEO SHOOTING SET WITH CHROMA KEY SCREENS**
SYSTEM ZUR REALISIERUNG EINES VIDEO-AUFNAHME SETS MIT CHROMA KEY LEINWÄNDEN
SYSTÈME POUR LA RÉALISATION D'UN PLATEAU DE TOURNAGE VIDÉO AVEC DES ÉCRANS CHROMA-KEY.

(30) Priority: 17.02.2021 IT 202100003602
(43) Date of publication of application: 27.12.2023
(73) Proprietor: Home Setv S.r.l., 20123 Milano (IT)
(72) Inventor: MASCITELLI, Giuseppe, 20123 Milano (IT)
(74) Representative: Praxi Intellectual Property Milano
(86) International application number: PCT/IB2022/051363
(87) International publication number: WO 2022/175825

(56) References cited:
- WO-A1-2016/177938
- US-A1- 2008 094 817
- UNKNOWN: "Types of Green Screens", 6 May 2019 (2019-05-06), XP055848388, Retrieved from the Internet <URL:https://web.archive.org/web/20190506211531/http://www.americanmovieco.com/featured/types-of-green-screens/> [retrieved on 20211006]
- CARL: "Top 10 Best Green Screen KIT (for beginners) in 2020 - Improve Video Studio", 4 June 2019 (2019-06-04), XP055812993, Retrieved from the Internet <URL:https://improvevideostudio.com/best-green-screen-kit-for-beginners/> [retrieved on 20210611]

## Description

### FIELD OF THE TECHNIQUE

The present invention relates to the field of digital video camera imaging and, in particular, to systems that adopt the chroma key technique, and that are specific to streaming video conferencing.

### STATE OF THE ART

The chroma key technique is often used in television recording or filming. The chroma key is used to set subjects and objects on virtual backgrounds, added later, which can be of two types: backgrounds of previously shot material or, as is currently very common, backgrounds of material completely processed digitally, with the help of computer graphics.

In the latter case, the background can be static, as during television weather forecasts, or it can be calculated dynamically, based on the movement of the camera that shoots the subject in the foreground, giving the illusion of a virtual set, or a three-dimensional television studio, completely virtual.

The chroma key technique had its first version with the blue back (blue screen) thanks to which scenes with actors were integrated with scenes shot elsewhere. Starting in 1970, the blue screen was gradually replaced by the green screen (color code: Pantone 354 green) more suitable for digital cameras.

With reference to videoconferencing, streaming videoconferencing platforms, while sometimes supporting the chroma key, are in the vast majority of cases used without any technical tool that helps a correct shooting with serious damage to the image of the subject and difficulty of communication.

The effectiveness of chroma key is critically dependent on the conditions under which the shots are taken, for example, the characteristics of lighting, shadows and precision of framing. This means that the use of this technique is limited to television studios or film sets with complex and expensive equipment and where experienced technical personnel work.

Document WO2016/177938 describes a chroma key technique in photography and/or videography that involves a flashlight arranged so that it is directed toward an object to be photographed, a chrome backdrop in front of which the object is to be photographed, and a first reflective surface arranged partly in front of the first flashlight so that part of the light from the first flashlight is directed toward the object to be photographed and part of the light from the first flashlight is reflected back toward the chrome backdrop. The first reflective surface is essentially the same color as the chrome backdrop.

Document US2008094817A1 discloses an educational lighting kit providing a floor positioning mat incorporating specific positioning points for lights, cameras, subjects and backgrounds. The following documents relate to chroma key techniques:
- "Types of Green Screens" (06/052019); URL: https://web.archive.org/web/20190506211531 /http://www.america nmovieco.com/featured/types-of-green-screens/
- Carl: "Top 10 Best Green Screen KIT (for beginners) in 2020-Improve Video Studio; (04/06/20219); URL: https://improvevideostudio.com/best-gree-screen-kit-for-beginners.

### SUMMARY OF THE INVENTION

The purpose of the present invention is to propose an implementing system of a set of shots in chroma key technique that can be installed and used in a relatively simple way (therefore also by not particularly expert personnel) and that can also allow overlapping effects not limited to a single back wall.

It should be noted that this ease of installation and use means that the system can be applied in a variety of contexts, not limited to professional television/cinema.

For example, one possible field of application is the reconstruction of a virtual store with presentations made in streaming.

In particular, the present invention aims to support users of streaming teleconferencing systems through the miniaturization and simplification of a complete set that can also be used in a home environment, for filming, simple in assembly and use and of great impact thanks to the immersiveness of the chroma key system.

It is an object of the present invention to provide a system for implementing a chroma key filming set as defined by claim 1 and particular embodiments thereof as described by dependent claims 2-10.

### BRIEF DESCRIPTION OF THE DRAWINGS

The constructive and functional characteristics of the invention may be better understood from the detailed description that follows, in which reference is made to the attached drawing plates representing some preferred and nonlimiting forms of implementation, in which:
- figure 1 shows, in top view, an example of an implementation system for a chroma key filming set employing three screens and a carpet;
- Figure 2 shows a rendering of said system;
- figure 3 shows a side view of the system including lighting fixtures;
- Figure 4 shows an example of a camera support structure used in said system;
- Figure 5 shows a front view of said system including chroma key screen supports;
- Figure 6 shows an example of a chroma key carpet that can be used in said system and of side covers;
- figure 7 shows a drape covering the base of a chroma key screen support and a light source applied to that support;
- figure 8 shows, in top view, said system according to an arrangement of side screens different from that of figure 1.

### DETAILED DESCRIPTION

In the accompanying figures, the same or similar elements are identified with the same numerical references.

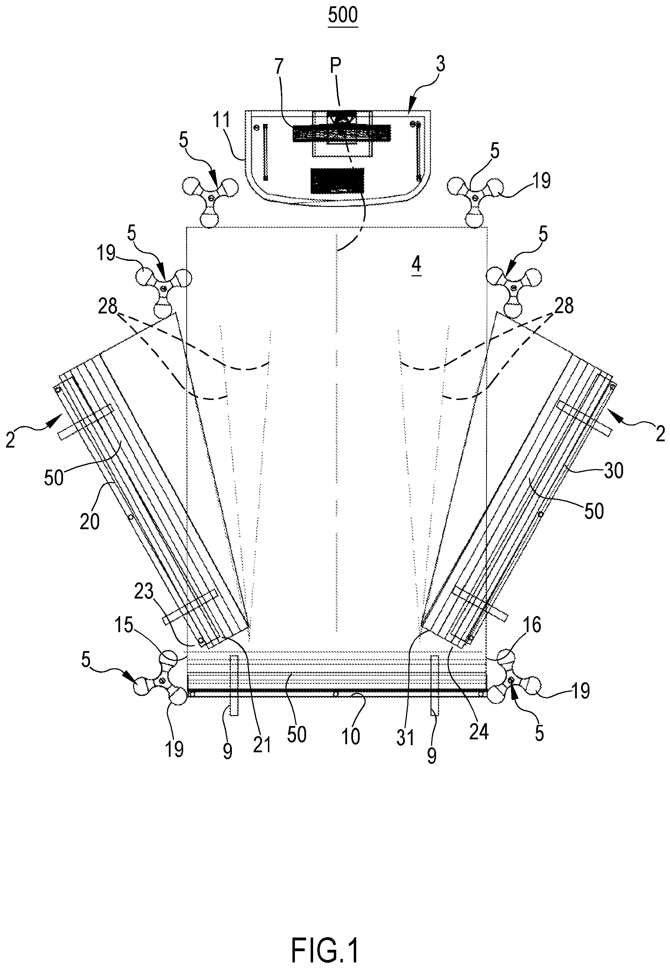

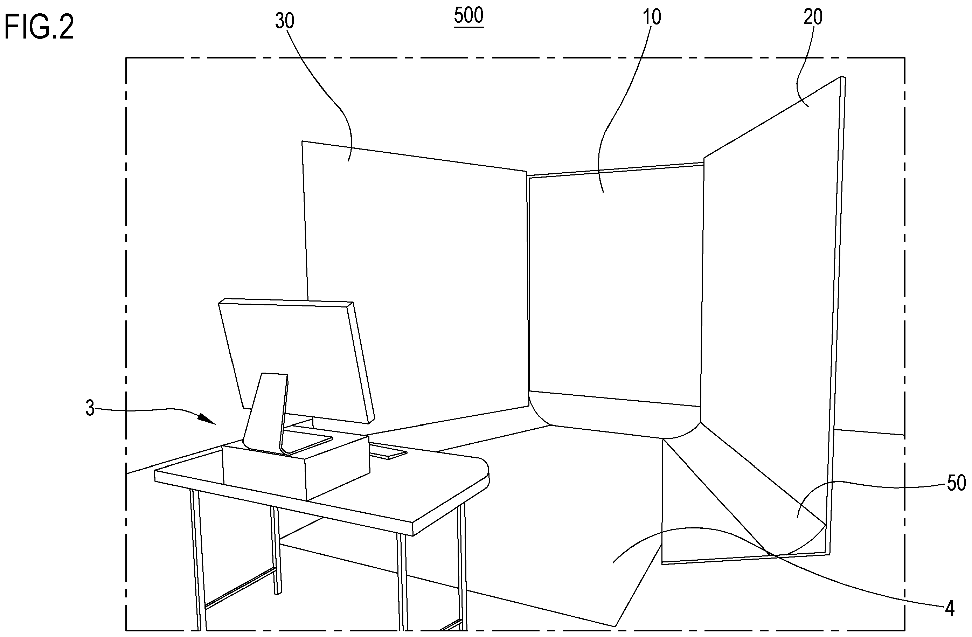

Figures 1 and 2 show an example of an implementing system 500 of a set of shots in the chroma key technique. According to the example of the figures, the system 500 includes a first chroma key screen 10 and at least one second chroma key screen 20. Advantageously, a third chroma key screen 30 may be provided.

Further in accordance with the depicted example, the system 500 includes a support structure 3 for a video camera, a carpet 4, and at least one portable lighting apparatus 5. The system 500 is employable for streaming video conferencing.

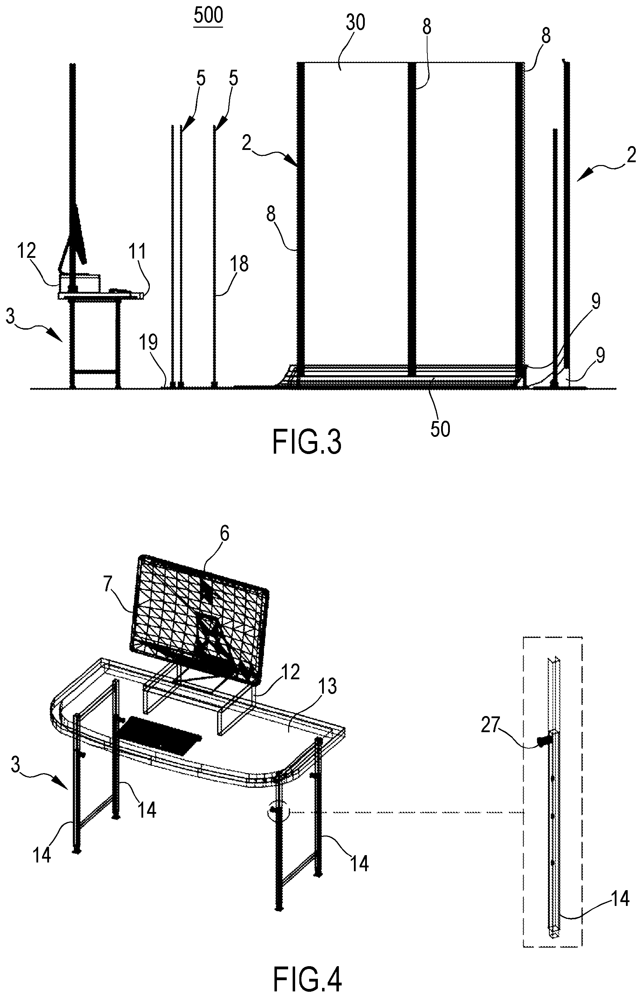

Note that, for the purpose of filming, recording, and/or streaming video conferencing, the system 500 is also equipped with a video camera 6 (e.g., a webcam, shown schematically in Figure 4), which may be integrated into a display 7 of a computer (e.g., a personal computer) or which may be a stand-alone device.

In particular, specific software resides in such a computer that processes the images (static or moving) taken by the video camera 6 by adding, according to the chroma key technique (i.e., chroma key applications), the desired images in correspondence to the three displays 10, 20 and 30. Alternatively, the computer installed in the system 500 may in turn be connected (e.g., wirelessly) to an external computer in which processing according to the chroma key technique takes place, as occurs for example, for streaming platforms. For example, a chroma key platform relies on an internet line with at least one fast ADSL connection.

Note that, currently on the market there are video conferencing platforms compatible with chroma key and others that are not compatible but that can be made compatible by downloading one of the applications on the market, called Virtual Camera.

Advantageously, the system 500 is fully compatible with both existing chroma key platforms on the market and those for which the chroma key application is to be added.

The system 500 can also be equipped with a suitable microphone, for example, built into the display 7 or portable, for sound recording, for example, in synchrony with image capture.

Note that the system 500 is also designed and sized to be installed in offices, retail or home environments, or other locations that have smaller spaces than actual television or movie sets. In addition, the 500 system is designed to be easily disassembled, transported, and reassembled.

In more detail, the first chroma key screen 10 (see also Figure 2) is equipped with a grid and a plurality of markers that allow (as known to the expert in the field), the chroma key application, to place (in manual mode) pre-selected digital images on the screen itself, which will then appear in the final video. The markers of the first chroma key screen 10 can also be, for example, of a type that can be used for automatic positioning of images by artificial intelligence software.

The first chroma key screen 10 can be a green color background (hexadecimal color value: # 00b140) or a blue color background (hexadecimal color value: # 0047bb).

The first chroma key screen 10 is easily rolled up and extended. For example, the size of the first chroma key screen 10 is between (base x height) 1.5 m x 1.5 m and 2.5 m x 2.5 m, with preferred sizes including 1.90 m x 1.90 m and 2.00 m x 2.50 m. In particular, the first chroma key screen 10 may have a minimum height of 2.00 m, while the height of a preferred implementation form is 2.5 m.

Considerations similar to those expressed above for the first chroma key screen 10 (hereinafter, "screen 10" for brevity) also apply to the second chroma key screen 20 and the third chroma key screen 30 (hereinafter, "screens" 20 or 30).

The first screen 10, the second screen 20, and the third screen 30 are supported by a related support 2. Notably, the support 2 is portable and may also be detachable and removable. According to a preferred example, it is a roll up type display (e.g., analogous to those used for banner advertising) on which the relative screen 10, 20 or 30 may be mounted.

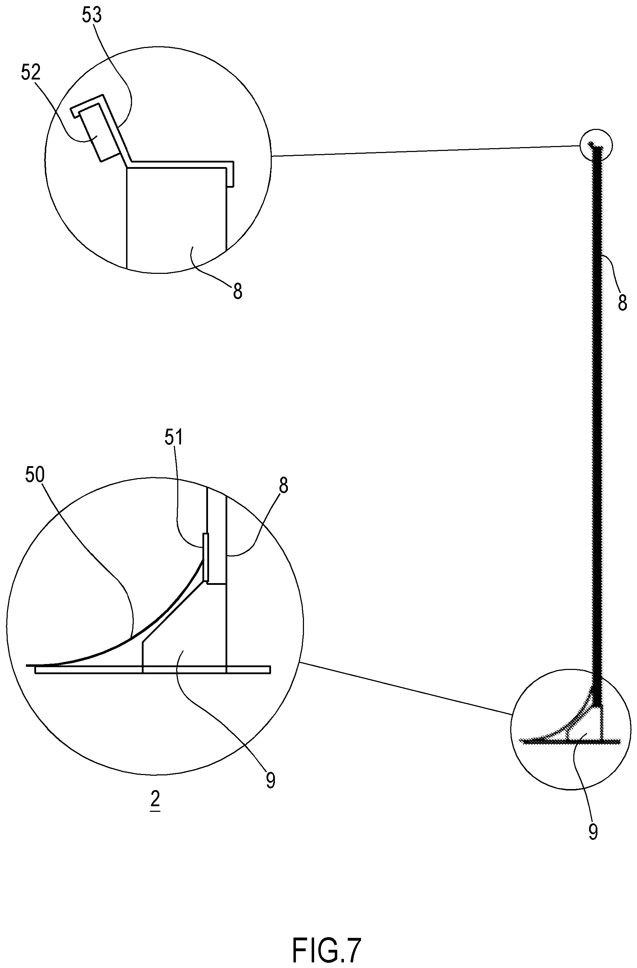

The support 2 comprises, for example, a base structure 9 (Figures 3 and 7) and support rods 8 (removable and/or, preferably, telescopic) and has a winding mechanism for rolling up and unwinding the chroma key screen 1. Advantageously, said roll up display 2 with the corresponding screen is housed, when the screen is rolled up, in a bag with a shoulder strap, which allows easy transportation.

The assembly of the roll up display 2 is extremely easy as it is simply necessary to take the display out of the bag, place the base 9 on the ground and insert the rods 8 (e.g. made of aluminum) in the base 9 of the display itself and then unroll the screen 1. In particular, referring for the sake of brevity only to the first screen 10, the support 2 may advantageously have a wand that acts both as a block, to prevent the first screen 10 from completely falling into the base 9, and as a curtain stretcher. In fact, by pulling said wand upwards, the first screen 10 unrolls and an interlocking system allows the wand to be fixed to the top of the rods 8 of the roll-up display 2.

According to a preferred form of implementation (Figure 7), the support 2 may be provided with a cover sheet 50 configured to cover the base 9 of the support so that it is not picked up by the camera 6. Advantageously, the cover sheet 50 is a chroma key screen. According to a preferred embodiment, a face of the inferior end of each rod 8 (or a face of the base 9) is provided with attachment means 51 of the cover sheet 50, such as, for example, Velcro. As is further described below, in relation to the carpet 4, the cover sheet 50 may extend to the floor and cover areas not covered by the carpet 4.

In addition, the upper end of the central rod 8 of each support 2 may incorporate a light source 52 having, for example, a corresponding battery. The end of the rod 8 may include a suitable attachment body 53 configured to house the light source and, optionally, a corresponding battery.

Note that the supports 2 of each screen 10, 20 and 30 allow the screens themselves to be positioned, taking into account the available spaces, and according to a configuration that allows defining an area or scene to be filmed, in which said screens appear as vertical walls in correspondence with which still or moving images will be shown in the final video.

For example, the first screen 10 is positioned vertically and in such an orientation, with respect to the camera 6, as to define the backdrop (i.e., a background part) of the scene to be filmed, as shown in Figures 1 and 2.

The second screen 20 is arranged vertically and in proximity to a first end 15 (figure 1) of the first screen 10, so as to form a side wall delimiting one side of the scene to be filmed. The third screen 30 is arranged (also in a vertical position) in proximity to a second end 16 of the first screen 10, so as to form another side wall delimiting another side of the scene to be filmed.

As shown in the figures, the three screens 10, 20 and 30 are generically arranged in a U-shape delimiting three sides of the scene.

More in detail, the second screen 20 has a first extreme portion 21 close to the first extreme 15 of the first screen 10 but spaced from this so as to identify a first opening 23 (between the two portions of the two screens 10 and 20 close together) that develops vertically.

Similarly, the third screen 30 has a second extreme portion 31 proximate to the second extreme 16 of the first screen 10, but spaced from this so as to identify a second opening 24 (between the two extreme portions of the two screens 1 and 30 approached). The first and second apertures 23 and 24 have, for example, a width, between 10 and 25 centimeters, and in particular 18-22 centimeters, and as will be described below allow the passage of light to illuminate the scene to be imaged.

In particular, in the system 500, the portable lighting apparatus 5 is arranged near the first opening 23 but outside the scene to be imaged. For example, the apparatus 5 is arranged laterally to the first screen 10 and posteriorly to the second screen 20 so that it illuminates the scene (and portions of the screens themselves) through the first opening 23, without being imaged by the video camera 6. The same considerations are valid for another apparatus 5 arranged in proximity to the second opening 24.

Further, advantageously, the second screen 20 and the third screen 30 are arranged to limit as much as possible that the openings 23 and 24 are visible in the video taken by the camera 6. For example, the second screen 20 and the third screen 30 are arranged to hide from the camera 6 the first end 15 and the second end 16 of the first screen 10.

Note also that, preferably, the second screen 20 and the third screen 30 are oriented relative to the first screen 10 so as to be symmetrical with respect to a vertical centerline plane P (Figure 1).

Depending on available space and specific requirements, the second screen 20 and the third screen 30 may be arranged at different angles relative to the first screen 10, as will also be indicated below according to a particular embodiment.

Consider the support structure 3, on which the camera 6 is arranged. Advantageously, said support structure 3 is designed to allow an adjustment of the height of the camera 6 relative to the ground. Furthermore, in order to allow its easy transportation, the support structure 3 is such that it assumes a compact non-use configuration and an use configuration.

According to a particular embodiment, the support structure 3 comprises a table 11 and, optionally, a superstructure12 (Figure 4).

The table 11 includes a top 13 (e.g., of substantially rectangular plan) and legs 14 (e.g., four legs) that are height-adjustable by a telescoping type mechanism according to a particular form of implementation. For example, each leg 14 includes two coaxial tubular elements that are adjustable by a spring mechanism acting on a handle 27.

According to an advantageous solution, in order to bring the table 11 into the compact configuration, the legs 14 are rotatably movable to assume a position substantially parallel to the top 13.

It should be noted that, advantageously, the table 11, can assume the function of a podium (in the maximum extension of its legs 14) allowing the use in standing or with a suitable stool).

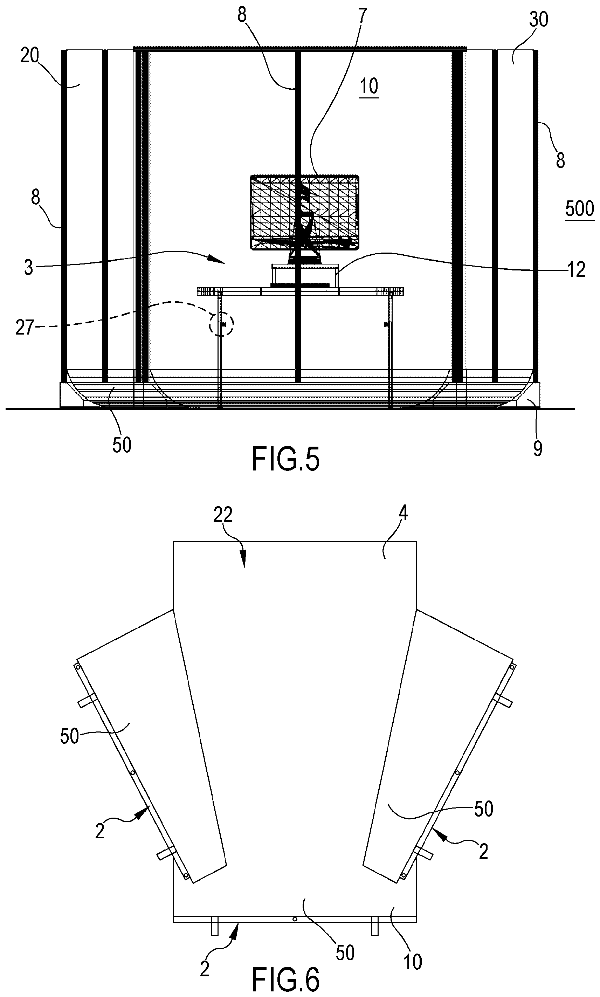

Referring to the carpet 4 (Figures 1 and 6), this is configured to be placed on the floor (or walking surface) and interposed between the support structure 3 (with the video camera 6) and the first screen 10 mounted on the support 2. A person may be placed on the carpet 4 to be filmed by the video camera 6. For example, the carpet 4 does not provide any automatic winder.

The carpet 4 (of the roll-up type) is provided with a positioning grid 22 that can be used to identify particular areas (identifiable by specific numbered boxes or provided with a corresponding identifier) on which to position the person to be filmed by the video camera 6 or to position expected objects on the set scene. Advantageously, the carpet 4 is also a chroma key screen, analogous to the screen 10 described above. The size of the carpet 4 may be between 2 m2 and 6 m2.

The cover sheets 50 made as chroma key screens (particularly those attached to the supports 2 disposed laterally of the carpet 4) may be arranged to cover areas of the walkable plane (i.e., the floor) not covered by the carpet 4. For example, the cover sheet 50 is triangular in shape and allows a side area not covered by the carpet 4 to be covered when the support 2 is oriented (Figures 1, 2 and 6) so that the corresponding screen is at least partially outside the carpet 4.

This ensures that the entire shooting scene (the background, side and walking surface) is active at the chroma key.

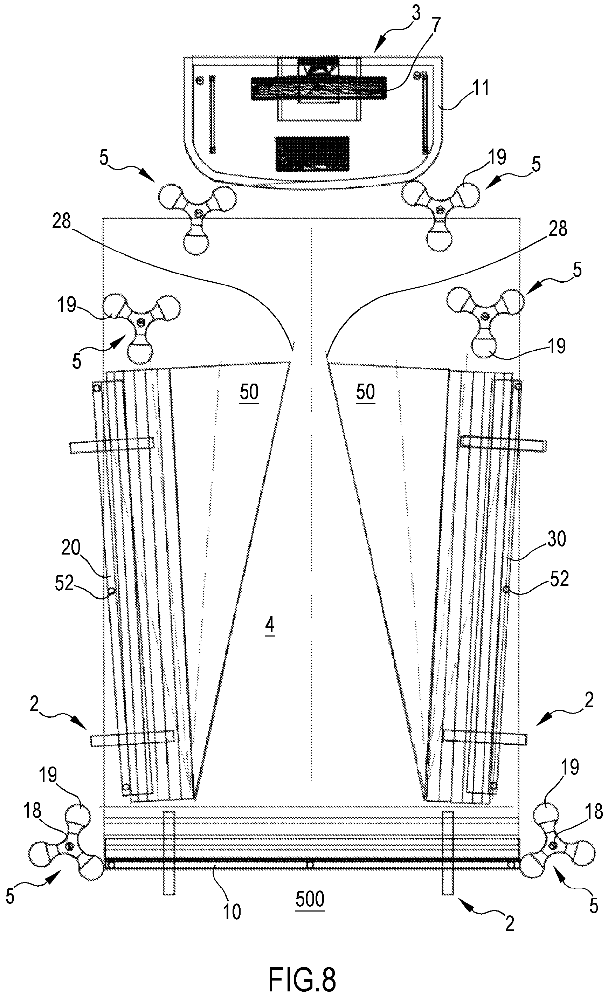

According to a preferred embodiment (Figure 1), the carpet 4 has graphic traces 28 (e.g., lines) indicating to the user how to correctly position the supports 2 of the second screen 20 and the third screen 30 with respect to the first screen 10 or how to position the cover sheet 50 (in particular, an extreme edge) so that it correctly connects to the carpet 4 in consideration of the chroma key technique. Figure 8 shows, in the case where the second screen 20 and the third screen 30 are above the carpet 4, how the corresponding drapes 50 in addition to covering the bases 9 correctly connect to the grid of the carpet 4 due to the traces 28.

With regard to the lighting of the stage, in addition to the two portable lighting apparatuses 5 near the openings 23 and 24, additional lighting apparatuses 5 may be provided arranged, for example, at the sides of the support structure 3 and/or near the ends of the second and third screens 20 and 30 closest to the support structure 3.

Each lighting apparatus 5 is such that it has preselected lighting parameters appropriate for the chroma key technique and, when appropriately positioned, advantageously does not require adjustment of such parameters by the user.

According to a particular embodiment, the lighting apparatus 5 is a lamp each having a plurality of Light Emitting Diode (LED) sources. In particular, with reference to Figure 3, each lamp 5 includes a related pole 18 (e.g., of a height of about 2 m) fixed to a lamp base 19 (Figure 8), for example, made of aluminum; in the pole 18 is mounted the plurality of LEDs, uniformly distributed over almost the entire length of the rod itself.

As can be seen in the example of Figures 1 and 8, the base 19 comprises three lobes and in the region of connection of said lobes is provided with a cup into which the pole 18 is inserted and fixed, for example, with a screw (e.g., a flat head screw with lathe screws).

According to a particular form of implementation, each lamp 5 has a maximum power consumption of 20 W, with a color temperature of 4000 K and an angular aperture of the illuminating radiation of 120°. In particular, each lamp 5 is accessorized with a corresponding transformer (for example, a 220/24 V transformer) and appropriate wiring for connection to an electrical outlet. The use of batteries to power the lamps 5 is not excluded.

It is possible to indicate to the user (in a special instruction sheet) the position in which to arrange the lamps 5 in such a way that they allow both to generate the chroma key effect and at the same time to correctly illuminate the subject to be filmed with the camera 6. Thanks to the preset configuration of the lamps 5 and their correct positioning, the lamps themselves do not need electronic regulation, resulting very simple to use.

In use, users will be able to easily mount the system 500 as described above and in a manner similar to as shown in the diagram in Figure 1 where the carpet 4 also represents a walkable plane for the user.

The lamps 5 will be positioned as intended, and the person who is the subject of the filming will be able to arrange himself on the pre-selected grid areas of the carpet 4 between the camera 6 and the scene bounded by the screens 10, 20 and 30.

Thanks to the grid 22 present on the carpet 4, it is possible to avoid leaving the frame or the scene delimited by the three screens 10, 20 and 30.

The software platform used can fully employ the markers of the screens 10, 20 and 30 in order to create a three-dimensional environment where both in the background and laterally are shown the desired still or moving images. In addition, the person being filmed can, for example, view on display 7 the video taken and already enriched with background images.

### Advantages and areas of use

It should be noted that the system 500 allows to take advantage of the chroma key technique for the construction of three-dimensional digital scenarios, and not only background, in non-professional environments and with components of small size and easily transportable.

In particular, the use of several chroma key screens side by side, together with the possibility of illuminating the scene through the openings between the screens themselves, avoids the need to use a complex and cumbersome lighting apparatus and a single chroma key screen that extends over two or three walls.

The system's small size and ability to be easily disassembled, transported and reassembled means that the 500 system can also be used in confined or under-equipped spaces, such as non-standard television or film sets (for example, at local television stations), offices or homes.

In addition, the structure and configuration of the system 500, which includes preset or easily set-up mechanical and electronic features, means that it can be easily assembled and used even by users who are not experts in television/cinema techniques, such as, for example, freelance journalists, influencers or bloggers working in a domestic environment.

A possible application of the 500 system is that of use by sales personnel, such as sales agents or clerks who can take advantage of the system in the context of long-distance communications, reducing their movements and the transport of samples. Consider, for example, a possible scenario where a salesperson uses the system 500 combined with platforms that replicate a virtual environment on three walls. This possible application may lead to a redesign of the current way of conducting business. In particular, the users of this system can show the connected audience in live streaming, the possibility to walk inside the virtual scene, for example a store, bringing the interaction of e-commerce very close to the real one.

In addition, thanks to the implementation features mentioned above, the system 500 can also be used for all those remote communications carried out in the context of videoconferences, remote conferences or online meetings. In this case, the system 500 can be implemented in the office and used to show moving background images (e.g., movies) or images related to presentations (e.g., slides). This is certainly possible, as the system 500 is compatible with video conferencing platforms on the market, such as, but not limited to, those of Zoom Video Communications or those platforms for which the initially unforeseen chroma key application has been added.

Considering the aforementioned ease of use, possible users of the 500 system include professionals, consultants, lawyers, doctors and architects.

It should be noted that a videoconference carried out using the system 500, and therefore enriched with background images, makes it possible to reproduce a situation comparable to that of a real meeting, not based on a remote connection.

The potential of the 500 system also extends to education, with applications in schools and universities.

### Legend of the numerical references of the figures

- support 2
- support structure 3
- carpet 4
- portable lighting apparatus 5
- camera 6
- display 7
- rod 8
- basic structure 9
- first chroma key screen 10
- table 11
- superstructure 12
- top 13
- legs 14
- first end 15
- second end 16
- pole 18
- lamp base 19
- second chroma key 20
- first extreme portion 21
- positioning grid 22
- first opening 23
- second opening 24
- handle 27
- graphic tracks 28
- third chroma key screen 30
- second extreme portion 31
- cover 50
- fixing means 51
- light source 52
- fixing body 53
- system 500 of implementation of a set of shots in chroma key technique

## Claims

1. Implementation system (500) of a chroma key shooting set, usable for streaming video conferencing, comprising:
- a first chroma key screen (10) as a background for a shooting scene and associated with a first support (2) configured to support the first screen in a vertical position relative to a walking surface (4);
- at least one second chroma key screen (20) arranged at one end (15) of the first screen (10) and so as to form a first side wall of the shooting scene; the second screen (20) being associated with a second support (2) configured to support the second screen (20) vertically and so that an opening (23) is identified between the end (15) of the first screen (10) and the second screen (20) with vertical development;
- a portable lighting apparatus (5) arranged in proximity to said opening (23) and external to the shooting scene and so as to illuminate said scene and at least the first screen (10);
- a carpet (4) disposed on the walking surface at the shooting scene, the carpet (4) comprising graphic traces (28) indicative of positions in which to arrange the supports (2) of said screens.

2. System (500) according to claim 1, further comprising:
a third chroma key screen (30) arranged at another end (16) of the first screen (10) and so as to form a second side wall of the shooting scene; the third screen (30) being associated with a third support (2) configured to support the third screen (30) in the vertical position and so as to locate a further opening (24) between said first (10) and third screens (30) with vertical development;
a further portable lighting apparatus (5) arranged in proximity to the further opening (24) and outside the shooting scene, configured to illuminate at least part of the first screen and at least part of the second screen.

3. System (500) according to claim 2, wherein each of said supports (2) is portable and detachable and removable.

4. System (500) according to claim 2, wherein each of said supports (2) is a roll up type display on which a corresponding chroma key screen can be mounted.

5. System (500) according to claim at least one of the preceding claims, wherein each support (2) comprises: a base structure (9), at least one support rod (8) of the first (10) or the at least one second screen (20) to be associated with the base structure (9).

6. System (500) according to claim 5, further comprising a cover sheet (50), of the chroma key type, arranged to cover said base structure (9) and part of a walking surface.

7. System (500) according to claim 6, further comprising fastening means (51) of the cover sheet (50) to the at least one support rod (8).

8. System (500) according to at least claim 5, wherein said at least one support rod (8) is provided at an upper end with a light source (52).

9. System (500) according to claim 7, wherein said fastening means comprises Velcro.

10. System (500) according to claim 1, further comprising a support structure (3) for a camera (6) external to said system (500); the support structure (3) being such as to assume a compact non-use configuration and a use configuration in which it has an adjustable height.

## Patentansprüche

1. Implementierungssystem (500) eines Chromaslüsselaufnahmesatzers, der für Streamingvideokonferenzen verwendbar ist, umfassend:
- einen ersten Chromaschlüsselbildschirm (10) als Hintergrund für eine Aufnahmeszene, der mit einer ersten Stütze (2) verbunden ist, die konfiguriert ist, um den ersten Bildschirm in einer vertikalen Position relativ zu einer Laufoberfläche (4) zu halten;
- mindestens einen zweiten Chromaschlüsselbildschirm (20), der an einem Ende (15) des ersten Bildschirms (10) angeordnet ist und so eine erste Seitenwand der Aufnahmeszene bildet; wobei der zweite Bildschirm (20) mit einer zweiten Stütze (2) verbunden ist, die konfiguriert ist, um den zweiten Bildschirm (20) vertikal zu stützen und so, dass eine Öffnung (23) zwischen dem Ende (15) des ersten Bildschirms (10) und dem zweiten Bildschirm (20) mit vertikaler Entwicklung identifiziert wird;
- eine tragbare Beleuchtungseinrichtung (5), die in der Nähe der Öffnung (23) und außerhalb der Aufnahmeszene angeordnet ist, um die Szene und mindestens den ersten Bildschirm (10) zu beleuchten;
- einen Teppich (4), der auf der Laufoberfläche der Aufnahmeszene angeordnet ist, wobei der Teppich (4) grafische Spuren (28) umfasst, die die Positionen angeben, an denen die Stützen (2) der Bildschirme angeordnet werden sollen.

2. System (500) nach Anspruch 1, ferner umfassend
einen dritten Chromaschlüsselbildschirm (30), der an einem anderen Ende (16) des ersten Bildschirms (10) angeordnet ist und so eine zweite Seitenwand der Aufnahmeszene bildet; wobei der dritte Bildschirm (30) mit einer dritten Stütze (2) verbunden ist, die konfiguriert ist, um den dritten Bildschirm (30) in der vertikalen Position zu halten und um eine weitere Öffnung (24) zwischen dem ersten (10) und dem dritten Bildschirm (30) mit vertikaler Entwicklung zu positionieren;
eine weitere tragbare Beleuchtungseinrichtung (5), die in der Nähe der weiteren Öffnung (24) und außerhalb der Aufnahmeszene angeordnet und konfiguriert ist, um mindestens einen Teil des ersten Bildschirms und mindestens einen Teil des zweiten Bildschirms zu beleuchten.

3. System (500) nach Anspruch 2, wobei jede der Stützen (2) tragbar, abnehmbar und entfernbar ist.

4. System (500) nach Anspruch 2, wobei jede der Stützen (2) eine aufrollbare Anzeige ist, an der ein entsprechender Chromaschlüsselbildschirm angebracht werden kann.

5. System (500) nach mindestens einem der vorstehenden Ansprüche, wobei jede Stütze (2) Folgendes umfasst: eine Basisstruktur (9), mindestens eine Stützstange (8) des ersten (10) oder des mindestens einen zweiten Bildschirms (20), die mit der Basisstruktur (9) verbunden werden soll.

6. System (500) nach Anspruch 5, ferner umfassend eine Abdeckfolie (50) vom Chromaschlüsseltyp, die angeordnet ist, um die Basisstruktur (9) und einen Teil einer Laufoberfläche abzudecken.

7. System (500) nach Anspruch 6, ferner umfassend Befestigungsmittel (51) der Abdeckfolie (50) an der mindestens einen Stützstange (8).

8. System (500) nach mindestens Anspruch 5, wobei die mindestens eine Stützstange (8) an einem oberen Ende mit einer Lichtquelle (52) bereitgestellt ist.

9. System (500) nach Anspruch 7, wobei das Befestigungsmittel einen Klettverschluss umfasst.

10. System (500) nach Anspruch 1, ferner umfassend eine Stützstruktur (3) für eine Kamera (6) außerhalb des Systems (500); wobei die Stützstruktur (3) so beschaffen ist, dass sie eine kompakte Nichtgebrauchskonfiguration und eine Gebrauchskonfiguration annehmen kann, in der sie eine einstellbare Höhe aufweist.

## Revendications

1. Système d'implémentation (500) d'un plateau de tournage à incrustation, utilisable pour une vidéoconférence en flux continu, comprenant :
- un premier écran d'incrustation (10) en tant qu'arrière-plan pour une scène de tournage et associé à un premier support (2) conçu pour supporter le premier écran dans une position verticale par rapport à une surface de circulation (4) ;
- au moins un deuxième écran d'incrustation (20) agencé au niveau d'une extrémité (15) du premier écran (10) et de façon à former une première paroi latérale de la scène de tournage ; le deuxième écran (20) étant associé à un deuxième support (2) conçu pour supporter le deuxième écran (20) verticalement et de sorte qu'une ouverture (23) est identifiée entre l'extrémité (15) du premier écran (10) et du deuxième écran (20) avec un développement vertical ;
- un appareil d'éclairage portable (5) agencé à proximité de ladite ouverture (23) et externe à la scène de tournage et de façon à illuminer ladite scène et au moins le premier écran (10) ;
- un tapis (4) disposé sur la surface de circulation au niveau de la scène de tournage, le tapis (4) comprenant des tracés graphiques (28) indiquant des positions dans lesquelles il faut agencer les supports (2) desdits écrans.

2. Système (500) selon la revendication 1, comprenant en outre :
un troisième écran d'incrustation (30) agencé au niveau d'une autre extrémité (16) du premier écran (10) et de façon à former une seconde paroi latérale de la scène de tournage ; le troisième écran (30) étant associé à un troisième support (2) conçu pour supporter le troisième écran (30) dans la position verticale et de façon à localiser une ouverture supplémentaire (24) entre lesdits premier (10) et troisième écrans (30) avec un développement vertical ;
un appareil d'éclairage portable (5) supplémentaire agencé à proximité de l'ouverture supplémentaire (24) et à l'extérieur de la scène de tournage, conçu pour illuminer au moins une partie du premier écran et au moins une partie du deuxième écran.

3. Système (500) selon la revendication 2, dans lequel chacun desdits supports (2) est portable et détachable et amovible.

4. Système (500) selon la revendication 2, dans lequel chacun desdits supports (2) est un affichage de type enroulable sur lequel un écran d'incrustation correspondant peut être monté.

5. Système (500) selon au moins l'une des revendications précédentes, dans lequel chaque support (2) comprend : une structure de base (9), au moins une tige de support (8) du premier (10) ou de l'au moins un deuxième écran (20) à associer à la structure de base (9).

6. Système (500) selon la revendication 5, comprenant en outre une feuille de couverture (50), du type incrustation, agencée pour couvrir ladite structure de base (9) et une partie d'une surface de circulation.

7. Système (500) selon la revendication 6, comprenant en outre un moyen de fixation (51) de la feuille de couverture (50) à l'au moins une tige de support (8).

8. Système (500) selon au moins la revendication 5, dans lequel ladite au moins une tige de support (8) est pourvue d'une source de lumière (52) au niveau d'une extrémité supérieure.

9. Système (500) selon la revendication 7, dans lequel ledit moyen de fixation comprend un Velcro.

10. Système (500) selon la revendication 1, comprenant en outre une structure de support (3) pour une caméra (6) externe audit système (500) ; la structure de support (3) étant telle qu'elle prend une configuration compacte de non-utilisation et une configuration d'utilisation dans laquelle elle a une hauteur ajustable.
